# EUROPEAN PATENT SPECIFICATION

(11) **EP 2 837 595 B1**
(45) Date of publication and mention of the grant of the patent: **08.08.2018**
(21) Application number: 13810773.5
(22) Date of filing: 24.06.2013
(51) Int. Cl.: C01B 3/38, C01B 3/48, H01M 8/06

(54) **FUEL PROCESSING DEVICE**
VORRICHTUNG ZUR KRAFTSTOFFVERARBEITUNG
DISPOSITIF DE TRAITEMENT DE CARBURANT

(30) Priority: 25.06.2012 JP 2012141984
(43) Date of publication of application: 18.02.2015
(73) Proprietor: Panasonic Intellectual Property Management Co., Ltd., Osaka-shi, Osaka 540-6207 (JP)
(72) Inventor: MITA, Yuki, Osaka-shi Osaka 540-6207 (JP)
(74) Representative: Schwabe - Sandmair - Marx
(86) International application number: PCT/JP2013/003943
(87) International publication number: WO 2014/002471

(56) References cited:
- WO-A1-2011/151986
- JP-A- 2004 149 403
- JP-A- 2009 062 223
- JP-A- 2009 120 448
- JP-A- 2011 210 643
- US-A1- 2011 014 528

## Description

### Technical Field

The present invention relates to a fuel processing apparatus that produces hydrogen gas from a raw material gas.

### Background Art

Hitherto, there is known a fuel processing apparatus that produces hydrogen gas from a raw material gas mainly containing a hydrocarbon compound and supplies the hydrogen gas to a power generation stack.

Generally, a fuel processing apparatus includes an evaporation section, a reforming section, a shift-conversion section, and a combustion section. The evaporation section evaporates reforming water so as to mix a raw material gas with water vapor. The reforming section causes the raw material gas mixed with the water vapor to pass through a reforming catalyst so as to be reformed into a hydrogen mixed gas. The shift-conversion section causes the hydrogen mixed gas to pass through a conversion catalyst so as to remove carbon monoxide therefrom. The combustion section supplies heat to the reforming section so as to maintain the reforming section at a temperature appropriate for a reaction. Heat of an exhaust gas of the combustion section and reaction heat of the shift-conversion section are supplied to the evaporation section, and are used to evaporate the reforming water.

Since a temperature suitable for a reaction in the shift-conversion section (for example, 300°C) is lower than a temperature suitable for a reaction in the reforming section (for example, 600°C), the hydrogen mixed gas sent to the shift-conversion section from the reforming section is required to be cooled. As disclosed in PTLs 1 and 2, a conventional fuel processing apparatus may employ a configuration in which a channel through which the reformed hydrogen mixed gas flows is disposed in proximity to the evaporation section so as to cause heat exchange, whereby the hydrogen mixed gas supplied to the shift-conversion section is cooled. In this manner, the temperature of the hydrogen mixed gas supplied to the shift-conversion section can be set to a temperature suitable for a reaction in the shift-conversion section.

Further, a technique has been proposed in which the positional relationship between an evaporation section and other members is adjusted to optimize the temperature of the constituting members. For example, a technique has been proposed in which a certain positional relationship among an evaporation section, a reforming gas channel, and a shift-conversion section is employed, whereby the temperature of the shift-conversion section is controlled by the evaporation section and the reforming gas channel (see PTLs 3 and 4). In addition, a technique has been proposed in which a shift-conversion section and an evaporation section are respectively disposed on the front and rear sides with a wall therebetween, to thereby control the temperature of the shift-conversion section (see PTLs 5 and 6). Further, a technique has been proposed in which a heat collecting layer is disposed between a preheating layer that evaporates water and a shift layer, whereby the heat of the preheating layer is absorbed by heat collecting layer (see PTLs 7 and 8).
WO2011/151986 A1 discloses a fuel processing apparatus comprising a burner, a reforming section, and a water gas shift section. Water is evaporated in an evaporation section, which is then fed to a reforming section. The gases then pass to a concentric section on the outside of the previous section, where gases are cooled and then fed to a water gas shift conversion section.
JP 2011 210643 discloses a fuel processing apparatus including an evaporation section and several further sections known in the prior art.

### Citation List

### Patent Literature

PTL 1 Japanese Patent Application Laid-Open No. 2009-209006
PTL 2 Japanese Patent Application Laid-Open No. 2011-207728
PTL 3 Japanese Patent Application Laid-Open No. 2004-149403
PTL 4 U.S Patent Application Publication No. 2005-0026011
PTL 5 WO2010/082507
PTL 6 U.S Patent Application Publication No. 2011-0014528
PTL 7 WO2000/063114
PTL 8 U.S Patent Application Publication No. 2001-0029735

### Summary of Invention

### Technical Problem

The reaction of hydrogen mixed gas in the shift-conversion section is an exothermic reaction. For this reason, for the proper operation of the shift-conversion section, in addition to the channel for a hydrogen mixed gas from the reforming section to the shift-conversion section in the above-mentioned conventional fuel processing apparatus, also the conversion catalyst is also required to be disposed in proximity to the evaporation section so as to be cooled. However, in this case, the channel through which the source gas and the water vapor flow has to be ensured in the evaporation section in accordance with the lengths of the channel of the above-mentioned hydrogen mixed gas and the conversion catalyst, thus increasing the size of the fuel processing apparatus.

An object of the present invention is to downsize a fuel processing apparatus, and to provide a fuel processing apparatus in which both of reformed hydrogen mixed gas and a catalyst through which the hydrogen mixed gas passes can be cooled.

### Solution to Problem

A fuel processing apparatus according to the present invention includes the features listed up in claim 1. Further advantageous embodiments are described through the features in the sub-claims.

As described, the catalyst reaction section is preferably disposed in proximity to the evaporation section so that the heat can be released thereto. With this configuration, when the catalyst reaction section is designed to cause an exothermic reaction, the heat is supplied to the evaporation section, and thus the evaporation of the reforming water can be facilitated.

Examples of the catalyst reaction section that causes an exothermic reaction include a selective oxidation section, as well as a shift-conversion section.

### Advantageous Effects of Invention

According to the present invention, it is possible to achieve downsizing of a fuel processing apparatus, and cooling of both of reformed hydrogen mixed gas and a catalyst through which the hydrogen mixed gas passes.

### Brief Description of Drawings

FIG. 1 is a longitudinal sectional view illustrating an entire fuel processing apparatus of an embodiment;
FIG. 2 is a diagram illustrating a flow of gas in the fuel processing apparatus of the embodiment;
FIG. 3 is a longitudinal sectional view illustrating a combustion unit of the fuel processing apparatus;
FIG. 4 is a longitudinal sectional view illustrating a reforming unit of the fuel processing apparatus;
FIG. 5 is a longitudinal sectional view illustrating a shift-conversion unit of the fuel processing apparatus;
FIG. 6 is a longitudinal sectional view illustrating a desulfurization unit of the fuel processing apparatus;
FIG. 7 is a longitudinal sectional view illustrating a constituting member of the shift-conversion unit;
FIG. 8 is a diagram for describing a gas flow in a first shift-conversion section;
FIG. 9 is a perspective view illustrating a partition member of the shift-conversion unit;
FIG. 10 is a perspective view illustrating an irregular surface of an outer peripheral member of the reforming unit;
FIG. 11 is a schematic view for describing a groove defined in the partition member of the shift-conversion unit;
FIG. 12 is a cross-sectional schematic view illustrating a region around the first shift-conversion section;
FIG. 13 is a sectional view illustrating a part of the first shift-conversion section of a modification of the fuel processing apparatus of the embodiment; and
FIG. 14 is a sectional view illustrating a part of the first shift-conversion section of a modification of the fuel processing apparatus of the embodiment.

### Description of Embodiments

Hereinafter, embodiments of the invention will be described in detail with reference to the accompanying drawings.

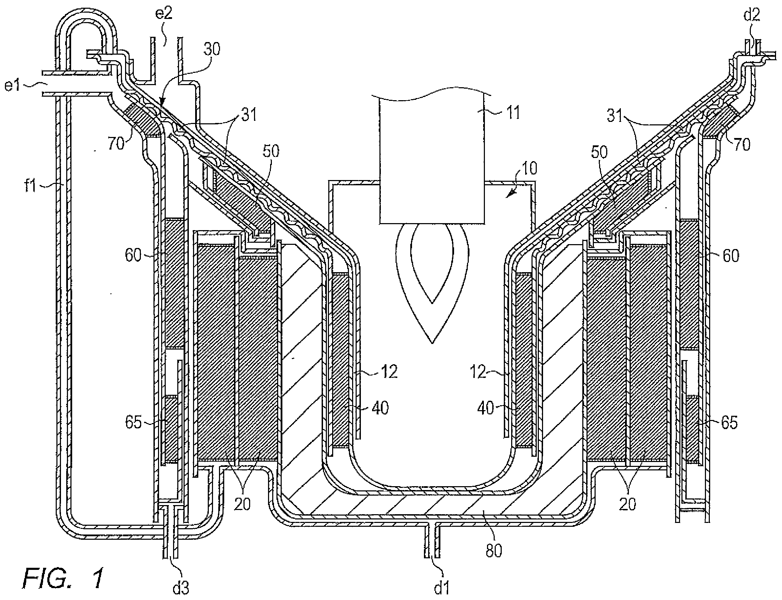

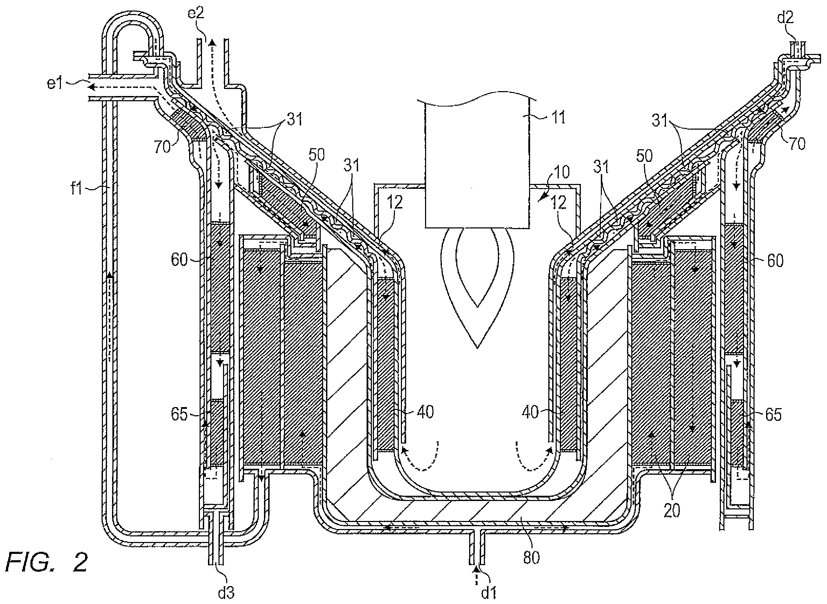

FIG. 1 is a longitudinal sectional view illustrating an entire fuel processing apparatus of the embodiment of the invention, and FIG. 2 is a diagram illustrating a flow of gas in the fuel processing apparatus of the embodiment.

The fuel processing apparatus of the embodiment is an apparatus that produces hydrogen gas from a raw material gas and supplies the hydrogen gas to a power generation stack, for example, in a cogeneration system using a fuel cell.

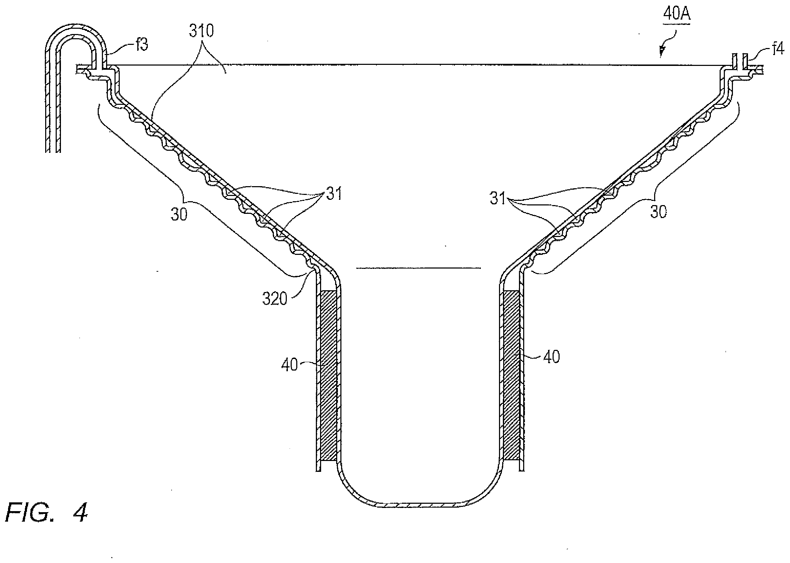

As illustrated in FIG. 1, the fuel processing apparatus of the embodiment includes combustion section 10, desulfurization section 20, evaporation section 30 (see FIG. 4), reforming section 40 (which corresponds to the pre-processing section), first shift-conversion section 50 (which corresponds to the catalyst reaction section), second shift-conversion section 60, ammonia decomposition section 65, selective oxidation section 70, and the like.

### [Functions of Components]

First, the functions of the components are described with reference to FIG. 1 and FIG. 2.

Combustion section 10 is disposed at the center of the apparatus, and supplies heat to reforming section 40 by burning the fuel gas using burner 11. The exhaust gas flows through discharge path 12 so as to be discharged from discharge port e2.

Desulfurization section 20 removes a sulfur component from a raw material gas such as an urban gas through, for example, hydrodesulfurization by causing the raw material gas to pass through a desulfurizing catalyst. The raw material gas is introduced from introduction port d1, passes through desulfurization section 20, and is pressure-fed to evaporation section 30.

Evaporation section 30 (see FIG. 4) includes spiral channel 31 that spirally extends along the funnel-shaped tilted surface toward the center, and mixes the raw material gas with the water vapor by allowing the raw material gas and the reforming water to pass through heated channel 31. Evaporation section 30 is disposed in proximity to exhaust gas discharge path 12, and channel 31 is heated by the heat of the exhaust gas. The raw material gas is introduced from desulfurization section 20 through pipe f1. Reforming water flows from introduction port d2.

Reforming section 40 reforms the raw material gas mixed with the water vapor into a hydrogen mixed gas through a reforming catalyst. Reforming section 40 is operated at a high temperature of 600°C, for example. Heat insulating material 80 for decreasing the amount of exhaust heat toward the periphery thereof is provided around reforming section 40 and below combustion section 10. The reformed hydrogen mixed gas is sent to first shift-conversion section 50.

First shift-conversion section 50 removes carbon monoxide contained in the hydrogen mixed gas by causing the hydrogen mixed gas to pass through the first conversion catalyst. First shift-conversion section 50 is operated at a high temperature of 300°C, for example. The reaction with the hydrogen mixed gas in first shift-conversion section 50 is an exothermal reaction. First shift-conversion section 50 is disposed in proximity to evaporation section 30, and the heat generated by first shift-conversion section 50 is supplied to evaporation section 30 and is used to heat channel 31. The hydrogen mixed gas having passed through first shift-conversion section 50 is sent to second shift-conversion section 60.

Second shift-conversion section 60 further decreases the concentration of the carbon monoxide of the hydrogen mixed gas by causing the hydrogen mixed gas to pass through a second conversion catalyst. Second shift-conversion section 60 is operated at a low temperature of, for example, 200°C lower than that of first shift-conversion section 50. The reaction of the hydrogen mixed gas in second shift-conversion section 60 is an exothermal reaction. The hydrogen mixed gas having passed through second shift-conversion section 60 is sent to ammonia decomposition section 65.

Ammonia decomposition section 65 removes ammonia contained in the hydrogen mixed gas by causing the hydrogen mixed gas to pass through an NH₃ decomposing catalyst. The hydrogen mixed gas from which ammonia is removed is sent to selective oxidation section 70. In ammonia decomposition section 65, a slight volume of air is introduced from introduction port d3 for a catalytic reaction.

Selective oxidation section 70 decreases the concentration of the carbon monoxide contained in the hydrogen mixed gas to 10 ppm or so by causing the hydrogen mixed gas to pass through a selective oxidizing catalyst. This gas becomes hydrogen gas supplied to a power generation stack. The reaction of the hydrogen mixed gas in selective oxidation section 70 is an exothermal reaction. Selective oxidation section 70 is disposed in proximity to evaporation section 30, and the heat generated by selective oxidation section 70 is supplied to evaporation section 30 and is used to heat channel 31. The hydrogen gas is supplied from outlet port e1 toward the power generation stack.

### [Outline of Structures]

Next, the outline of the structures of the respective sections will be described.

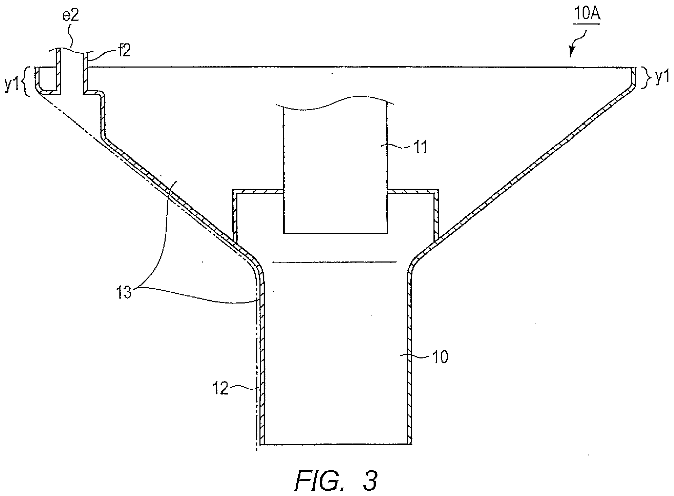

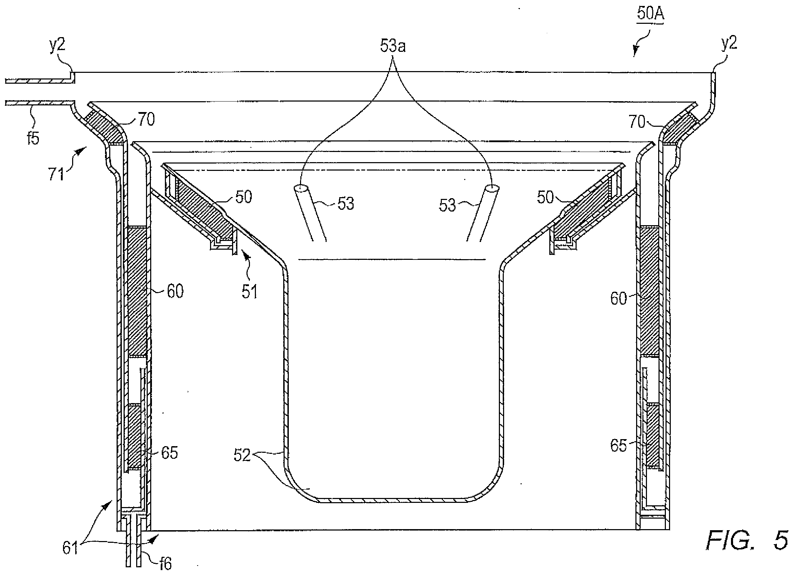

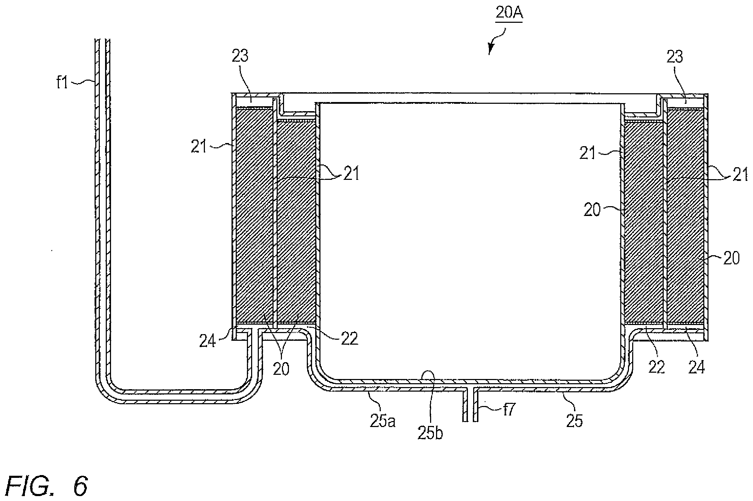

FIG. 3 is a longitudinal sectional view illustrating a combustion unit of the fuel processing apparatus. FIG. 4 is a longitudinal sectional view illustrating a reforming unit of the fuel processing apparatus. FIG. 5 is a longitudinal sectional view illustrating a shift-conversion unit of the fuel processing apparatus. FIG. 6 is a longitudinal sectional view illustrating a desulfurization unit of the fuel processing apparatus.

As illustrated in FIG. 3 to FIG. 6, the fuel processing apparatus of the embodiment is divided into a plurality of units in the manufacturing process, and the respective units are bonded to one another by welding or the like. The respective units include fuel unit 10A (FIG. 3), reforming unit 40A (FIG. 4), shift-conversion unit 50A (FIG. 5), and desulfurization unit 20A (FIG. 6).

### [Combustion Unit]

As illustrated in FIG. 3, combustion unit 10A includes burner 11, combustion section 10 that performs a combustion using burner 11, wall 13 that defines one side of exhaust gas discharge path 12, and pipe f2 that connects discharge port e2 to discharge path 12.

Wall 13 is formed in an annular shape about burner 11 and combustion section 10 so as to surround them. In wall 13, the periphery of combustion section 10 is formed in a cylindrical shape, and a portion in proximity to evaporation section 30 (see FIG. 1) is formed in a conical tilted surface shape.

In combustion unit 10A, for example, outer peripheral portion y1 is joined to a place corresponding to reforming unit 40A by welding or the like.

### [Reforming Unit]

As illustrated in FIG. 4, reforming unit 40A is a unit that includes evaporation section 30 and reforming section 40. Reforming unit 40A is provided with inner peripheral member 310 and outer peripheral member 320 that define the spaces of channel 31 and reforming section 40 by the gap between the first and second members and pipes f3 and f4 into which the raw material gas and the reforming water are introduced.

Inner peripheral member 310 is formed in a container shape which annularly surrounds combustion unit 10A, and covers the lower side of combustion unit 10A (the flame contacting side). Outer peripheral member 320 is disposed concentrically with inner peripheral member 310 on the outside of inner peripheral member 310, and is formed in an annular shape which surrounds inner peripheral member 310 and of which the upper and lower sides are opened.

### [Shift-Conversion Unit]

As illustrated in FIG. 5, shift-conversion unit 50A is a unit that includes first shift-conversion section 50, second shift-conversion section 60, ammonia decomposition section 65, and selective oxidation section 70.

Shift-conversion unit 50A includes partition (partition member) 52 that covers one side of the gas channel from reforming section 40 to first shift-conversion section 50 and first constituting member 51 that forms the catalyst container of first shift-conversion section 50 and the gas channel therearound.

Details of first constituting member 51 of shift-conversion unit 50A will be described later.

Further, shift-conversion unit 50A includes second constituting member 61 that forms the catalyst containers of second shift-conversion section 60 and ammonia decomposition section 65 and the gas channel therearound and third constituting member 71 that forms the catalyst container of selective oxidation section 70.

Partition 52 is formed in a container shape which annularly surrounds reforming section 40 and of which the upper side is opened and the lower side is covered. Although described in detail later, partition 52 is provided with plural grooves 53 and plural openings 53a that send the gas flowing on the inside (the center side) of partition 52 toward the upstream side of first shift-conversion section 50 disposed at the outside of partition 52.

First to third constituting members 51, 61, and 71 respectively have annular structures, and the cross-sectional forms illustrated in FIG. 5 are continued substantially in the circumferential direction. Further, first to third constituting members 51, 61, and 71 are concentrically arranged about combustion section 10. Pipe f6 for introducing air is connected to second constituting member 61 at a part in the circumferential direction thereof, and pipe f5 for sending hydrogen gas is connected to third constituting member 71 at a part in the circumferential direction thereof.

In combustion unit 50A, for example, outer peripheral portion y2 is bonded to a corresponding place of reforming unit 40A by welding or the like.

### [Desulfurization Unit]

As illustrated in FIG. 6, desulfurization unit 20A is a unit that includes desulfurization section 20 and raw material gas introduction channel 25. In desulfurization unit 20A, catalyst container 21 of desulfurization section 20 and gas channels 22 to 24 therearound are formed in an annular shape in which the cross-sections thereof in FIG. 6 are connected substantially in the circumferential direction. A part of gas channel 24 in the circumferential direction is connected with pipe f1 that sends out desulfurized gas.

In addition, two bottom plates 25a and 25b that define introduce channel 25 by the gap therebetween are provided at the center bottom side of desulfurization unit 20A. Bottom plates 25a and 25b are integrally molded with the members constituting gas channels 22 to 24 of desulfurization section 20. Introduction channel 25 is a channel which is defined by the planar gap between double bottom plates 25a and 25b, and the center thereof is connected with pipe f7.

Desulfurization unit 20A is fitted and fixed in the gap of shift-conversion unit 50A with heat insulating material 80 therebetween.

### [Details of Structure of Shift-conversion unit]

Next, details of first constituting member 51 of shift-conversion unit 50A are described.

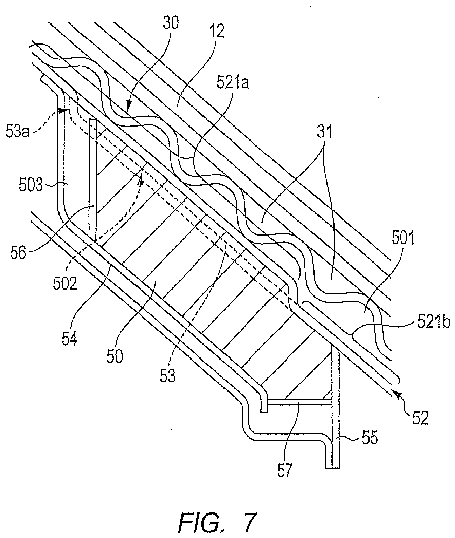

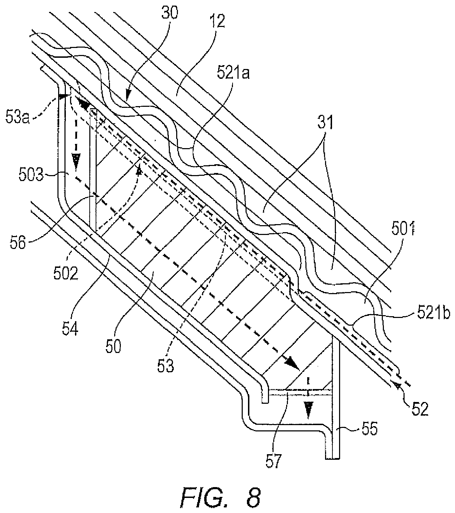

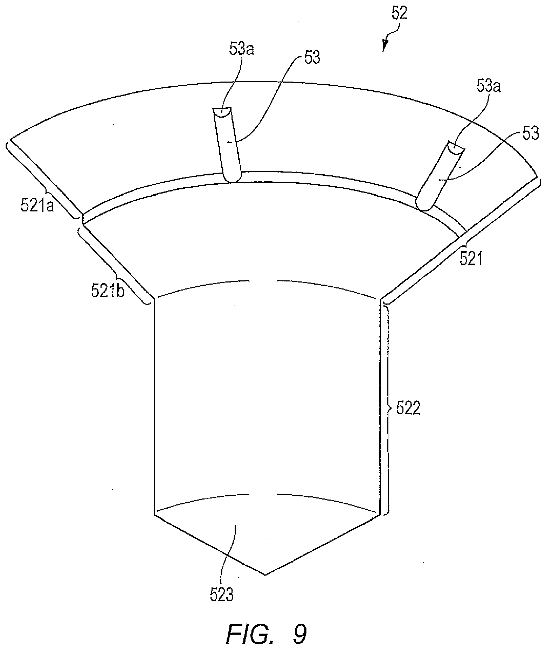

FIG. 7 is a partially enlarged view illustrating a region around first shift-conversion section 50 of the fuel processing apparatus in which the units are joined together, and FIG. 8 is a diagram for describing a gas flow in a first shift-conversion section. FIG. 9 is a perspective view illustrating a part of partition 52.

First constituting member 51 includes partition 52 that defines one side of a space for housing the catalyst (which corresponds to the housing container; catalyst housing casing) and gas channel 502 (which corresponds to the intermediate channel); wall 54, wall 55, upper cover 56 and lower cover 57 that define respective surfaces of the catalyst housing container; and a first conversion catalyst.

Partition 52 is integrally molded by metal pressing. Partition 52 is a container member whose one end side is opened and the other end side is sealed, and in which tilted section 521, inner cylinder section 522, and bottom section 523 are continuously formed from the opening side (see FIG. 9).

Tilted section 521 is formed as a tilted surface of a truncated cone whose diameter decreases from the opening side toward the other end side. Inner cylinder section 522 is formed in a cylindrical form whose diameter is substantially the same between the opening side and the bottom side. Bottom section 523 seals the bottom side of inner cylinder section 522. Tilted section 521, inner cylinder section 522, and bottom section 523 are substantially axially symmetrical (rotationally symmetrical about the axis), with their central axes overlapped each other.

Tilted section 521 is composed of first tilted section 521a and second tilted section 521b that are tilted in a funnel shape and are continuously formed from the opening side. In first tilted section 521a, tubular groove 53 protruding toward radially outside relative to the other surfaces is formed. Gas channels 501 and 502 through which hydrogen mixed gas flows from reforming section 40 to first shift-conversion section 50 are defined by a gap between outer peripheral member 320 of reforming unit 40A and partition 52.

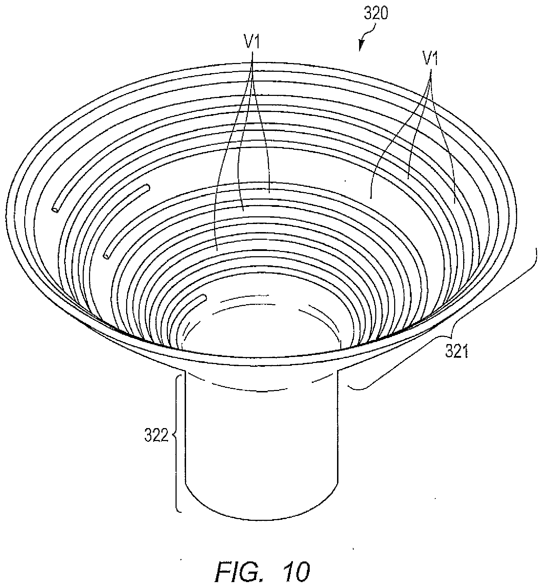

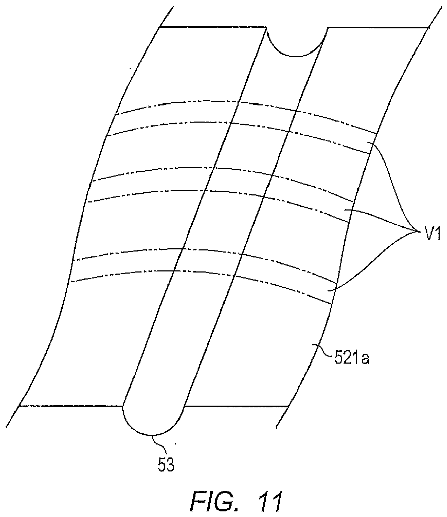

FIG. 10 is a perspective view illustrating outer peripheral member 320 of reforming unit 40A (FIG. 4). FIG. 11 is a schematic view illustrating a part of the surface provided with groove 53 in first tilted section 521a, as viewed from the inside of partition 52 (that is, as viewed from outer peripheral member 320 side).

In outer peripheral member 320, tilted section 321 and outer cylinder section 322 are continuously formed from one opening side toward the other opening side. Tilted section 321 has a tilted surface in a funnel shape on which an irregular surface is formed. In the irregular surface of tilted section 321, recessed groove V1 are continuously defmed in a spiral form. Recessed groove V1 is a spiral groove that spirally extends from the peripheral edge side of inclination portion 321 toward the center thereof, and is provided so that the center axis of the spiral shape substantially overlaps the center axes of inclination portion 321 and outer cylinder portion 322. Recessed groove V1 is continuously defined from the opening side of inclination portion 321 to the front side of outer cylinder portion 322. Outer peripheral member 320 is integrally molded by metal pressing.

On the other hand, in first tilted section 521a of partition 52, radially outwardly (that is, in a direction opposite to outer peripheral member 320) protruding tubular groove 53 is defined in a vertical direction of first tilted section 521a. Partition 52 is concentrically disposed on the outside of outer peripheral member 320 (reforming unit 40A). To be more specific, partition 52 and outer peripheral member 320 are joined by welding along recessed groove VI, with the irregular surface of tilted section 321 and first tilted section 521a being in close contact with each other, for example. That is, except for the part corresponding to gas channel 502, the housing container of first shift-conversion section 50 is joined to evaporation section 30 along the channel of evaporation section 30.

Gas channel 501 is defined by an annular gap between inner cylinder section 522 and outer peripheral member 320 (reforming unit 40A), and between second tilted section 521b and outer peripheral member 320 (reforming unit 40A). Gas channel 502 is defined by a gap between tubular groove 53 defined in first tilted section 521a and the irregular surface on tilted section 321 of evaporation section 30. In addition, gas channel 502 is disposed in proximity to the housing container for the first conversion catalyst. Through gas channel 502, the hydrogen mixed gas from reforming section 40 flows from one side (lower side) to the other side (upper side) of the housing container.

It is to be noted that, as illustrated in FIG. 9, a plurality of gas channels 502 may be provided in the circumferential direction of first shift-conversion section 50 at substantially equal intervals. For example, in the case where gas channels 502 are provided in the circumferential direction at equal intervals of 60 degrees, six grooves 53 are defined in partition 52. The number of grooves 53 defined in tilted section 521a (that is, the number of channels 502) is not limited to six.

Each of walls 54 and 55 is integrally molded by metal pressing.

Upper cover 56 is an annular cover having such a size that its inner periphery section is fitted to partition 52, and its outer periphery section is fitted to the inside of wall 54. Lower cover 57 is an annular cover having such a size that its inner periphery section is fitted to wall 55, and its outer periphery section is fitted to the inside of wall 54. Upper cover 56 and lower cover 57 are each provided with a mesh that does not allow the catalyst to pass therethrough, but allows gas to pass therethrough.

Gas channel 503 (which corresponds to the air chamber) is defined by an annular space surrounded by partition 52, wall 54, and upper cover 56. Gas channel 503 connects a downstream port (opening 53a) of gas channel 502 and a upstream port of the housing space for the first conversion catalyst. Preferably, gas channel 503 disperses the hydrogen mixed gas sent from opening 53a, and supplies the gas to first shift-conversion section 50. That is, gas channel 503 supplies the hydrogen mixed gas sent through tubular gas channel 502 by dispersing the gas to the entire inlet (upper cover 56) of annular first shift-conversion section 50. That is, gas channel 503 is defined between gas channel 502 and the housing container of shift-conversion section 50, so as to expand the gas channel.

The housing space for the first conversion catalyst is defined by an annular space surrounded by partition 52, wall 54, and wall 55. In the housing space for the first conversion catalyst, the hydrogen mixed gas sent to gas channel 503 is supplied from the upper side toward the lower side.

With the above-mentioned configuration, upon reaching gas channel 501, the hydrogen mixed gas sent from reforming section 40 is output from opening 53a to gas channel 503 through gas channel 502 as illustrated in FIG. 8. Next, the hydrogen mixed gas having reached gas channel 503 passes through the first conversion catalyst through upper cover 56. That is, in first shift-conversion section 50, the hydrogen mixed gas from reforming section 40 at first flows from one side (lower side of tilted section 521) to the other side (upper side of tilted section 521) through gas channel 502, and then, the hydrogen mixed gas is supplied to the housing container of the first conversion catalyst from the above-mentioned the other side toward the one side. That is, first shift-conversion section 50 has a turn-back structure.

In this manner, even in the case where the hydrogen mixed gas is not sufficiently cooled (for example, 450°C) at the time when it reaches first shift-conversion section 50 (that is, a region around the upstream of gas channel 502) from reforming section 40, the hydrogen mixed gas is cooled to a suitable temperature (for example, 300°C) after flowing through gas channel 502 through the housing container of the first conversion catalyst, before turning back to pass through the first conversion catalyst.

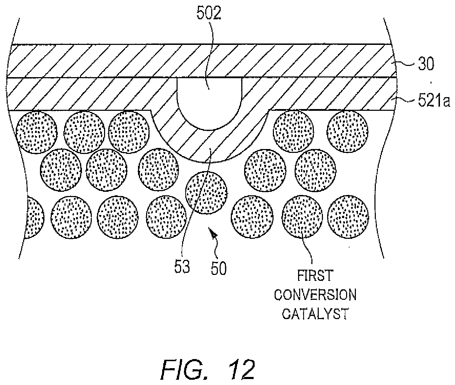

FIG. 12 is a schematic view illustrating a cross-section around first shift-conversion section 50 taken along the direction in which groove 53 extends.

First tilted section 521a of partition 52 and the irregular surface of tilted section 321 of evaporation section 30 are joined to each other. Thus, gas channel 502 is defined. In addition, first tilted section 521a is a part of the surface defining one side of the housing container of the first conversion catalyst. Thus, as illustrated in FIG. 12, gas channel 502 and the housing container of the first conversion catalyst are both disposed in proximity to evaporation section 30.

As described above, according to the fuel processing apparatus of the embodiment, first shift-conversion section 50 is designed to allow hydrogen mixed gas (processing gas) to pass the catalyst and is disposed in proximity to evaporation section 30 that evaporates reforming water such that heat can be released to evaporation section 30. Gas channel 502 sends the hydrogen mixed gas from reforming section 40 to first shift-conversion section 50, and is disposed in proximity to evaporation section 30 such that heat can be released to evaporation section 30. That is, both of gas channel 502 and the housing container of the first conversion catalyst in first shift-conversion section 50 are disposed in proximity to evaporation section 30 with partition 52 therebetween. In other words, gas channel 502 is defined by groove 53 that is a part of the surface (tilted section 521) defining the housing container of the first conversion catalyst. Thus, the hydrogen mixed gas from reforming section 40 flowing through gas channel 502 can be cooled by the heat exchange with evaporation section 30, and the first conversion catalyst can be cooled by the heat exchange with evaporation section 30. That is, the hydrogen mixed gas from reforming section 40 and the first conversion catalyst can be cooled at the same time. In addition, since the hydrogen mixed gas and the first conversion catalyst are cooled mainly by the heat exchange with evaporation section 30, the efficiency of the fuel processing apparatus can be enhanced in comparison with the case where cooling is performed by means of heat dissipation.

Further, according to the fuel processing apparatus of the embodiment, in first shift-conversion section 50, hydrogen mixed gas from reforming section 40 at first flows through gas channel 502 that is defined along the housing container of the first conversion catalyst from one side toward the other side of the first conversion catalyst, and thereafter, the hydrogen mixed gas is supplied to the housing container of the first conversion catalyst from the above-mentioned the other side toward the one side. That is, in gas channel 502, gas is sent toward the distant side with respect to reforming section 40 in first shift-conversion section 50, and then caused to turn back so as to flow from the distant side toward the near side with respect to reforming section 40 in first shift-conversion section 50. Since the first shift-conversion section 50 has the turn-back structure as described above, it is possible to prevent the total length of spiral channel 31 of evaporation section 30 from being increased (that is, it is possible to prevent the outermost diameter of evaporation section 30 from being increased) when disposing both of gas channel 502 and the housing container of the first conversion catalyst in such a manner as to be in contact with evaporation section 30. In addition, since hydrogen mixed gas can be cooled with gas channel 502 in proximity to the housing container of the first conversion catalyst, the length from reforming section 40 to the entrance of first shift-conversion section 50 (the upstream port for cooling the hydrogen mixed gas in gas channel 502) can be correspondingly reduced. Thus, the fuel processing apparatus can be downsized.

As described above, according to the embodiment, while achieving the downsizing of the fuel processing apparatus, both of reformed hydrogen mixed gas and a catalyst through which the hydrogen mixed gas passes can be cooled.

In addition, in first shift-conversion section 50 having the turn-back structure, the direction in which hydrogen mixed gas flows in gas channel 502, and the direction of hydrogen mixed gas flowing through the first conversion catalyst are opposite to each other as illustrated in FIG. 8. Here, the closer to the upstream side (lower side of tilted section 521), the higher the temperature of the hydrogen mixed gas flowing through gas channel 502, whereas the closer to the downstream side (upper side of tilted section 521), the lower the temperature as a result of the cooling. On the other hand, the closer to upper side of tilted section 521 serving as the inlet of hydrogen mixed gas, the more exothermic reaction of the first conversion catalyst occurs, and the higher the temperature of the first conversion catalyst. Meanwhile, the closer to the lower side of tilted section 521, the less exothermic reaction of the first conversion catalyst occurs, and the lower the temperature of the first conversion catalyst.

That is, on the lower side of tilted section 521, the hydrogen mixed gas flowing through gas channel 502 has a high temperature, and the first conversion catalyst has a low temperature; and, conversely, on the upper side of tilted section 521, the hydrogen mixed gas flowing through gas channel 502 has a low temperature, and the first conversion catalyst has a high temperature. Thus, by providing the turn-back structure to first shift-conversion section 50, it is possible to equalizer the vertical temperature distribution of tilted section 521 of first shift-conversion section 50. In other words, it is possible to prevent a situation where the temperature of a part of the first conversion catalyst is extremely increased. With this configuration, for example, it is possible to maintain the temperature distribution of the first conversion catalyst at a temperature suitable for the reaction (for example, 300°C) by the cooling achieved by the heat exchange with evaporation section 30, and to prevent a situation where the activity of a part of the first conversion catalyst is lowered due to sintering.

In addition, by providing the turn-back structure to first shift-conversion section 50, the flow of hydrogen mixed gas in first shift-conversion section 50 can be changed. Alternatively, in first shift-conversion section 50, the inlet (for example, in the proximity of the upstream of gas channel 502) and the outlet (for example, in the proximity of lower cover 57) of the hydrogen mixed gas can be disposed at positions close to each other. With this configuration, the degree of freedom of disposing the components of the fuel processing apparatus at the time of designing can be improved.

Further, in the fuel processing apparatus of the embodiment, gas channel 502 is defined by pressing on the side surface of evaporation section 30 of the housing container of first shift-conversion section 50. That is, on tilted section 521 (first tilted section 521a) joined with the irregular surface on which spiral channel 31 of evaporation section 30 is defined, groove 53 protruding toward the direction opposite to evaporation section 30 is defined. In addition, partition 52 having tilted section 521 and outer peripheral member 320 having the irregular surface are each integrally molded by metal pressing. Therefore, the form and position of gas channel 502 defined by the space surrounded by groove 53 and the irregular surface can be set with high accuracy by the pressing of partition 52 and outer peripheral member 320.

In addition, the form and position of the housing container of the first conversion catalyst may be set by the pressing of partition 52 with high accuracy. Therefore, the housing container is filled with the first conversion catalyst without gap, and it is thus possible to prevent a situation where the hydrogen mixed gas is not reacted with the first conversion catalyst and passed through (short cut) the first conversion catalyst, for example. Consequently, a fuel processing apparatus with high performance can be readily provided.

Further, according to the fuel processing apparatus of the embodiment, a plurality of gas channels 502 are defined in first tilted section 521a. With this configuration, by controlling the amount of the hydrogen mixed gas flowing through gas channel 502, the cooling amount of hydrogen mixed gas can be easily controlled.

### [Modification of Fuel Processing Apparatus]

In the embodiment, the evaporation section has the funnel-shaped tilted surface. In a modification, the evaporation section has a cylindrical surface.

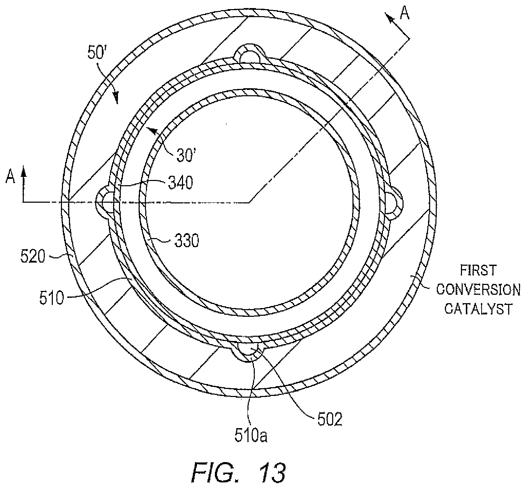

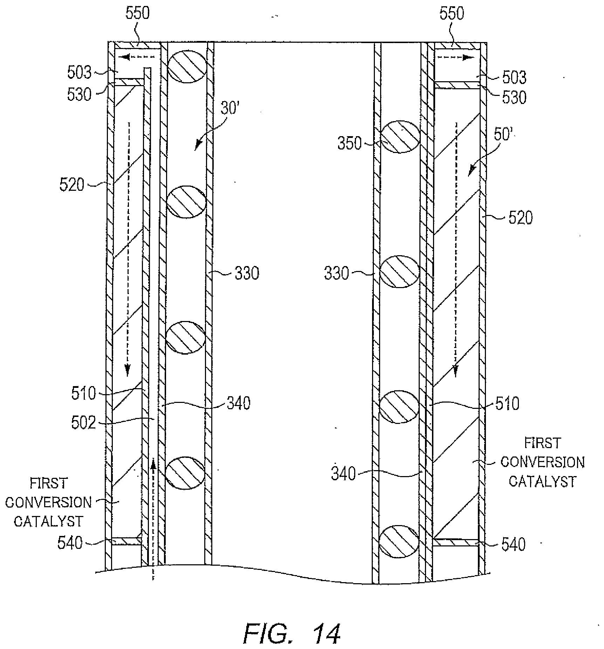

FIG. 13 and FIG. 14 illustrate evaporation section 30', first shift-conversion section 50' and a peripheral gas channel according to the modification. FIG. 13 is a lateral sectional view illustrating evaporation section 30' and first shift-conversion section 50', and FIG. 14 is a sectional view taken along line A-A of FIG. 13. In addition, a broken-line arrow in FIG. 14 indicates a flow of hydrogen mixed gas.

It is to be noted that the configurations of the other components (combustion section 10, reforming section 40, and the like) of the fuel processing apparatus may be the same as those in the embodiment (FIG. 1) or those in a conventional fuel processing apparatus (not illustrated).

The components of evaporation section 30' include inner peripheral member 330 (which corresponds to the inner cylinder), outer peripheral member 340 (which corresponds to the outer cylinder), and spiral member 350 whose inside is joined to inner peripheral member 330 and outside is joined to outer peripheral member 340. Spiral member 350 spirally extends along the annular surface. The channel of evaporation section 30' is defined by a spiral space surrounded by inner peripheral member 330, outer peripheral member 340 and spiral member 350.

The components of first shift-conversion section 50' include inner peripheral member 510, outer peripheral member 520, upper cover 530, lower cover 540, and wall 550 (not illustrated in FIG. 13). Inner peripheral member 510 is provided with radially (that is, in a direction opposite to outer peripheral member 340) protruding tubular groove 510a. Gas channel 502 of hydrogen mixed gas from reforming section 40 to first shift-conversion section 50' is defined by a gap between outer peripheral member 340 and inner peripheral member 510.

Gas channel 503 is defined by an annular space surrounded by inner peripheral member 510, outer peripheral member 520, upper cover 530, and wall 550. Gas channel 503 connects a downstream port of gas channel 502 and the housing space for the first conversion catalyst together, disperse hydrogen mixed gas sent from gas channel 502, and supplies the gas to the housing space.

Upper cover 530 and lower cover 540 are each provided with a mesh that does not allow the catalyst to pass therethrough, but allows gas to pass therethrough.

According to the modification, as in the embodiment, gas channel 502 through which hydrogen mixed gas flows from reforming section 40 to first shift-conversion section 50', and the housing container of the first conversion catalyst are both disposed in proximity to evaporation section 30'. Thus, the hydrogen mixed gas flowing through gas channel 502 and the first conversion catalyst can be cooled at the same time. In addition, as in the embodiment, in first shift-conversion section 50', hydrogen mixed gas from reforming section 40 at first flows through gas channel 502 that is defined along the housing container of the first conversion catalyst from one side toward the other side of the first conversion catalyst, and thereafter, the hydrogen mixed gas is supplied to the housing container of the first conversion catalyst from the above-mentioned the other side toward the one side. By providing the turn-back structure to first shift-conversion section 50' in this manner, it is possible to prevent the total length of spiral channel 31 of evaporation section 30' from being increased due to the cooling, and thus the fuel processing apparatus of the modification can be downsized.

Hereinabove, the embodiment of the present invention has been described.

While first shift-conversion section 50 has the turn-back structure in the embodiment, the catalyst section having the turn-back structure is not limited to first shift-conversion section 50. For example, in fuel processing apparatus illustrated in FIG. 1, instead of first shift-conversion section 50, selective oxidation section 70 (which corresponds to the catalyst reaction section) may have the turn-back structure. In this case, hydrogen mixed gas sent from second shift-conversion section 60 (which corresponds to pre-processing section) at first flows through the tubular gas channel extending from the lower side to the upper side of tilted section 521, and then passes through the selective oxidation catalyst of selective oxidation section 70 from the upper side toward the lower side of tilted section 521. Here, as in FIG. 1, the gas channel and the housing container of the selective oxidation catalyst are disposed in proximity to evaporation section 30. Thus, both of the hydrogen mixed gas from second shift-conversion section 60 and the selective oxidation catalyst can be cooled at the same time.

While exhaust gas discharge path 12 of combustion section 10, first shift-conversion section 50 and selective oxidation section 70 are disposed in proximity to evaporation section 30 for the heat exchange in the embodiment, other configurations for applying heat to evaporation section 30 may be employed.

Further, in the embodiment, an example of a configuration has been described in which the shift-conversion section has a double-stage structure and includes desulfurization section 20 and ammonia decomposition section 65. However, the shift-conversion section may have a single-stage structure, and desulfurization section 20 and ammonia decomposition section 65 may not be provided.

### Industrial Applicability

The present invention is applicable to a fuel processing apparatus that supplies hydrogen gas to a power generation stack.

### Reference Signs List

10 Combustion section
30, 30' Evaporation section
31, 501, 502, 503 Gas channel
40 Reforming section
50, 50' First shift-conversion section
52 Partition
53, 510a Groove
60 Second shift-conversion section
70 Selective oxidation section
310, 330, 510 Inner peripheral member
320, 340, 520 Outer peripheral member
321, 521 Tilted section
V1 Recessed groove

## Claims

1. A fuel processing apparatus comprising:
an evaporation section (30) that evaporates reforming water, the evaporation section (30) including a channel (31) that spirally extends along a funnel-shaped tilted surface toward a center, and the evaporation section (30) being configured to cause the reforming water and source gas to flow through the channel (31); a shift-conversion section (50) that causes processing gas to pass through a conversion catalyst to convert the gas, and
a gas channel (501, 502, 503) that sends the gas from a reforming section (40) to the shift-conversion section (50), the reforming section (40) causing the gas to pass through a reformer catalyst to reform the gas, wherein
the gas channel (501, 502, 503) includes an intermediate channel (502) through which the gas flows, the intermediate channel (502) being defined by pressing on a surface of the evaporation section side (30) of a catalyst housing casing of the shift-conversion section (50) and the intermediate channel (502) being defined by groove (53) that is a part of a surface (521) joined with an irregular surface on which the channel (31) of the evaporation section (30) is defined so as to be allowed to release heat to the evaporation section (30), and the catalyst housing casing of the shift-conversion section (50) being joined to the evaporation section (30) along the channel of the evaporation section (30) except for a part corresponding to the intermediate channel (502),
a downstream end of the intermediate channel (502) and an upstream end of the shift-conversion section (50) are in communication with each other

2. The fuel processing apparatus according to claim 1, wherein
the intermediate channel (502) sends the gas toward a side of the shift-conversion section (50) distant from the reforming section (40), and
the shift-conversion section (50) turns back the gas from the side distant from the reforming section (40) toward the reforming section (40).

3. The fuel processing apparatus according to claim 1, wherein
the evaporation section (30), the shift-conversion section (50) and the reforming section (40) are concentric annular sections, and
a plurality of the intermediate channels (502) of the gas channel (501, 502, 502) are provided, the plurality of the intermediate channels (502) being disposed in a circumferential direction of the shift-conversion section (50) at substantially equal intervals.

4. The fuel processing apparatus according to claim 1, wherein
the evaporation section (30) includes a channel that spirally extends between an outer cylinder (322) and an inner cylinder (522), the evaporation section (30) being configured to cause the reforming water and source gas to flow through the channel, the outer cylinder (322) and the inner cylinder (522) being concentrically disposed, and
the shift-conversion section (50) is an annular section that surrounds an outer peripheral surface of the evaporation section (30).

5. The fuel processing apparatus according to claim 1, wherein an air chamber (503) configured to expand the gas channel is defined between the intermediate channel (502) and a catalyst charging space of the shift-conversion section (50).

## Patentansprüche

1. Brennstoffverarbeitungsvorrichtung, die Folgendes umfasst:
einen Verdampfungsabschnitt (30), der Wasser zur Reformierung verdampft, wobei der Verdampfungsabschnitt (30) einen Kanal (31) umfasst, der sich entlang einer trichterförmigen schrägen Oberfläche zu einem Zentrum spiralförmig erstreckt, und wobei der Verdampfungsabschnitt (30) so konfiguriert ist, dass er das Wasser zur Reformierung und das Quellengas durch den Kanal (31) strömen lässt;
einen Abschnitt (50) zur katalytischen Umwandlung, der bewirkt, dass sich das Prozessgas durch einen Umwandlungskatalysator bewegt, um das Gas umzuwandeln, und
einen Gaskanal (501, 502, 503), der das Gas von dem Abschnitt (40) zur Reformierung zu dem Abschnitt (50) zur katalytischen Umwandlung schickt, wobei der Abschnitt (40) zur Reformierung bewirkt, dass sich das Gas durch einen Reformierungskatalysator bewegt, um das Gas zu reformieren, wobei
der Gaskanal (501, 502, 503) einen mittleren Kanal (502) umfasst, durch den das Gas strömt, wobei der mittlere Kanal (502) durch Pressen auf eine Oberfläche der Verdampfungsabschnittseite (30) eines Katalysatoraufnahmegehäuses des Abschnitts (50) zur katalytischen Umwandlung definiert ist und der mittlere Kanal (502) durch eine Rille (53) definiert ist, die ein Teil einer Oberfläche (521) ist, die mit einer unregelmäßigen Oberfläche verbunden ist, auf der der Kanal (31) des Verdampfungsabschnitts (30) definiert ist, damit Wärme zu dem Verdampfungsabschnitt (30) freigegeben werden kann, und wobei das Katalysatoraufnahmegehäuse des Abschnitts (50) zur katalytischen Umwandlung mit dem Verdampfungsabschnitt (30) entlang des Kanals des Verdampfungsabschnitts (30) mit Ausnahme eines Teils, das dem mittleren Kanal (502) entspricht, verbunden ist,
wobei ein stromabwärts gelegenes Ende des mittleren Kanals (502) und ein stromaufwärts gelegenes Ende des Abschnitts (50) zur katalytischen Umwandlung miteinander kommunizieren.

2. Brennstoffverarbeitungsvorrichtung nach Anspruch 1, wobei
der mittlere Kanal (502) das Gas zu einer Seite des Abschnitts (50) zur katalytischen Umwandlung fern von dem Abschnitt (40) zur Reformierung schickt, und
der Abschnitt (50) zur katalytischen Umwandlung das Gas von der Seite fern von dem Abschnitt (40) zur Reformierung zu dem Abschnitt (40) zur Reformierung zurückführt.

3. Brennstoffverarbeitungsvorrichtung nach Anspruch 1, wobei
der Verdampfungsabschnitt (30), der Abschnitt (50) zur katalytischen Umwandlung und der Abschnitt (40) zur Reformierung konzentrische ringförmige Abschnitte sind, und
mehrere mittlere Kanäle (502) des Gaskanals (501, 502, 502) vorgesehen sind, wobei die mehreren mittleren Kanäle (502) in einer Umfangsrichtung des Abschnitts (50) zur katalytischen Umwandlung in im Wesentlichen gleichen Abständen angeordnet sind.

4. Brennstoffverarbeitungsvorrichtung nach Anspruch 1, wobei
der Verdampfungsabschnitt (30) einen Kanal umfasst, der sich zwischen einem äußeren Zylinder (322) und einem inneren Zylinder (522) spiralförmig erstreckt, wobei der Verdampfungsabschnitt (30) so konfiguriert ist, dass er das Wasser zur Reformierung und das Quellengas durch den Kanal strömen lässt, wobei der äußere Zylinder (322) und der innere Zylinder (522) konzentrisch angeordnet sind, und
der Abschnitt (50) zur katalytischen Umwandlung ein ringförmiger Abschnitt ist, der eine Außenumfangsfläche des Verdampfungsabschnitts (30) umgibt.

5. Brennstoffverarbeitungsvorrichtung nach Anspruch 1, wobei eine Luftkammer (503), die konfiguriert ist, den Gaskanal zu erweitern, zwischen dem mittleren Kanal (502) und einem Katalysatorladeraum des Abschnitts (50) zur katalytischen Umwandlung definiert ist.

## Revendications

1. Appareil de traitement de carburant comportant :
une section d'évaporation (30) qui évapore de l'eau de reformage, la section d'évaporation (30) comprenant un canal (31) qui s'étend en spirale le long d'une surface inclinée en forme d'entonnoir en direction d'un centre, et la section d'évaporation (30) étant configurée de manière à faire circuler l'eau de reformage et le gaz source à travers le canal (31) ;
une section de conversion catalytique (50) qui fait passer un gaz à traiter à travers un catalyseur de conversion pour convertir le gaz, et
un canal de gaz (501, 502, 503) qui envoie le gaz d'une section de reformage (40) à la section de conversion catalytique (50), la section de reformage (40) faisant passer le gaz à travers un catalyseur reformeur pour reformer le gaz, où
le canal de gaz (501, 502, 503) comprend un canal intermédiaire (502) à travers lequel circule le gaz, le canal intermédiaire (502) étant défini par pressage d'une surface côté section d'évaporation (30) d'un boîtier de catalyseur de la section de conversion catalytique (50) et le canal intermédiaire (502) étant défini par une rainure (53) qui fait partie d'une surface (521) jointe à une surface irrégulière sur laquelle est définie le canal (31) de la section d'évaporation (30), de manière à permettre une libération de chaleur à destination de la section d'évaporation (30), et le boîtier de catalyseur de la section de conversion catalytique (50) étant joint à la section d'évaporation (30) le long du canal de la section d'évaporation (30) à l'exception d'une partie correspondant au canal intermédiaire (502),
une extrémité aval du canal intermédiaire (502) et une extrémité amont de la section de conversion catalytique (50) communiquent l'une avec l'autre.

2. Appareil de traitement de carburant selon la revendication 1, où
le canal intermédiaire (502) envoie le gaz vers un côté de la section de conversion catalytique (50) éloigné de la section de reformage (40), et
la section de conversion catalytique (50) renvoie le gaz du côté éloigné de la section de reformage (40) vers la section de reformage (40).

3. Appareil de traitement de carburant selon la revendication 1, où
la section d'évaporation (30), la section de conversion catalytique (50) et la section de reformage (40) sont des sections annulaires concentriques, et
une pluralité de canaux intermédiaires (502) des canaux de gaz (501, 502, 502) sont fournis, la pluralité de canaux intermédiaires (502) étant disposée dans une direction circonférentielle de la section de conversion catalytique (50) à des intervalles substantiellement égaux.

4. Appareil de traitement de carburant selon la revendication 1, où
la section d'évaporation (30) comprend un canal qui s'étend en spirale entre un cylindre extérieur (322) et un cylindre intérieur (522), la section d'évaporation (30) étant configurée pour faire circuler l'eau de reformage et le gaz source à travers le canal, le cylindre extérieur (322) et le cylindre intérieur (522) étant disposés de manière concentrique, et
la section de conversion catalytique (50) est une section annulaire qui entoure une surface périphérique extérieure de la section d'évaporation (30).

5. Appareil de traitement de carburant selon la revendication 1, où une chambre à air (503) configurée pour dilater le canal de gaz est définie entre le canal intermédiaire (502) et un espace de chargement de catalyseur de la section de conversion catalytique (50).
